(19) Europäisches Patentamt
European Patent Office
Office européen des brevets

(11) EP 1 935 926 A1

(12) **EUROPEAN PATENT APPLICATION**

(43) Date of publication:
**25.06.2008 Bulletin 2008/26**

(21) Application number: **07123321.7**

(22) Date of filing: **17.12.2007**

(51) Int Cl.:
***C08J 3/20*** (2006.01) ***C08L 21/00*** (2006.01)
***C08K 3/36*** (2006.01) ***B60C 1/00*** (2006.01)

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **20.12.2006 US 876095 P**
**31.10.2007 US 930805**

(71) Applicant: **THE GOODYEAR TIRE & RUBBER COMPANY**
**Akron, OH 44316-0001 (US)**

(72) Inventors:
- **Thielen, Georges Marcel Victor**
  **L-4995, Schouweiler (LU)**
- **Frank, Uwe Ernst**
  **D-66606, St. Wendel (DE)**
- **Schmitz, Frank**
  **L-7780, Bissen (LU)**

(74) Representative: **Kutsch, Bernd**
**Goodyear SA**
**Patent Department**
**Avenue Gordon Smith**
**7750 Colmar-Berg (LU)**

(54) **Process of preparing a rubber composition**

(57) The invention is directed to a process for the production of rubber composition, wherein the rubber composition comprises 100 parts by weight of elastomer. The process comprises the steps of
(A) mixing a first composition comprising 30 to 110 phr of a silica filler and 20 to 90 phr of a diene based elastomer selected from cis 1,4-polyisoprene rubber (natural or synthetic), 3,4-polyisoprene rubber, styrene/isoprene/butadiene rubber, emulsion and solution polymerization derived styrene/butadiene rubbers, and cis 1,4-polybutadiene rubbers, to form a first nonproductive compound;
(B) mixing a second composition comprising from 10 to 80 phr of a rubber containing a nitrile moiety and the first nonproductive compound to form a second nonproductive compound; and
(C) mixing a third composition comprising curatives and the second nonproductive compound to form a productive compound.

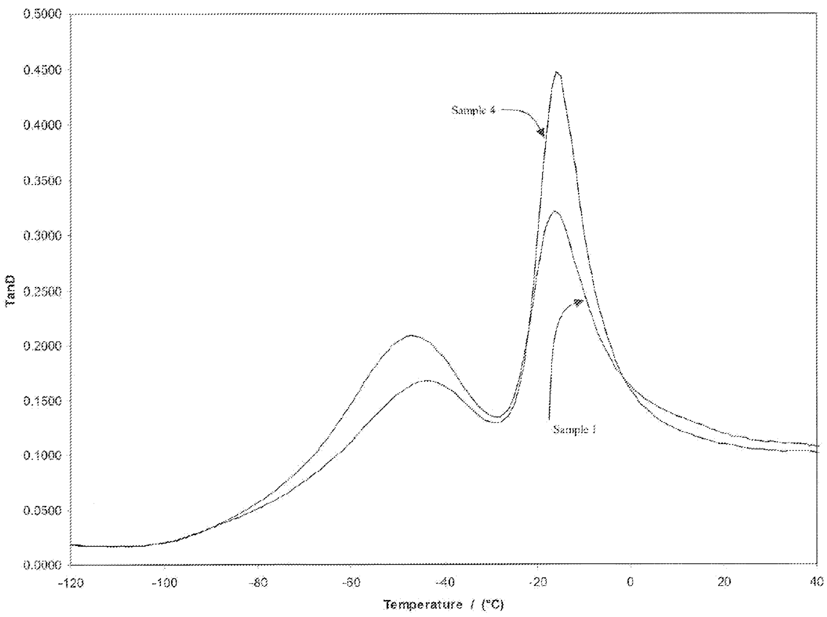


FIG - 1

EP 1 935 926 A1

## Description

### Background of the Invention

There is increasing demand to develop tires with a high level of handling performance, good stability and steering response when changing lanes, avoiding obstacles on the road and cornering. Improved road grip without compromising stability is critical for vehicles traveling at high speed. However, higher tire operating temperatures are encountered at high speeds than are experienced during normal driving and the hot rubber in the tire becomes more pliable which reduces the handling stability of the tire, a so-called "borderline" use of said tire.

A widely adopted method to improve stability, particularly road gripping properties, is to increase the hysteresis loss of tread rubber compositions. A large hysteresis loss during the deformation of tread is used for increasing a friction force between the tread and road surface. However, a significant increase of heat buildup will occur during the running of the tires as the hysteresis loss of the tread rubber becomes large, causing wear resistance of the tread rubber to deteriorate rapidly. On the other hand, it is believed that controllability is significantly influenced by hardness (which is closely related to cornering stiffness of a tire) and breaking strength of rubber compositions. In order to enhance controllability, especially steering response, it is necessary to increase the stiffness of the tire compound in general and the tread in particular.

### Summary of the Invention

The present invention is directed to a process according to claim 1.

Dependent claims refer to preferred embodiments of the invention.

### Description of the Invention

The mixing of the rubber composition typically includes two nonproductive steps followed by one productive step. The final curatives including sulfur-vulcanizing agents, or curatives, are typically mixed in the final stage which is conventionally called the "productive" mix stage in which the mixing typically occurs at a temperature, or ultimate temperature, lower than the mix temperature(s) than the preceding non-productive mix stage(s).

In the first nonproductive mix step, one or more diene based elastomers are mixed with silica and optionally other additives, but exclusive of curatives, to produce a first nonproductive mix.

In the second nonproductive mix step, following the first nonproductive step, the first nonproductive mix is mixed with a rubber containing a nitrile moiety, optionally a particulate rubber gel, and optionally additional silica and other additives, but exclusive of curatives, to produce a second nonproductive mix.

In the productive mix step, following the second nonproductive mix step, curatives are mixed with the second nonproductive mix to produce a productive compound.

The productive compound is then formed into a desired tire component, which is then used in the building of a tire.

The rubber composition includes a rubber containing a nitrile moiety. The rubber containing a nitrile moiety is added during the second nonproductive mix stage of the process to produce the rubber composition. This rubber will comprise from 10 to 80 phr of the total 100 parts by weight of rubber in the composition. Preferably, from 10 to 40 phr will be the rubber containing the nitrile moiety. The rubber is preferably derived from two or more polymerizable monomers. For example, the rubber comprises repeat units derived from 5 to 50 parts by weight of an olefinically unsaturated nitrile co-monomer, and the balance derived from conjugated diene monomers and vinyl substituted aromatic monomers. Preferably, from 18 to 40 by weight of the nitrile containing rubber is derived from an olefinically unsaturated nitrile co-monomer.

Representative examples of suitable conjugated diene monomers and vinyl substituted aromatic monomers which may be used to prepare the nitrile containing polymer include those used in preparation of the terpolymer with hydroxyl groups. Preferably, 1,3-butadiene, or 1,3-butadiene and styrene are used.

Representative examples of suitable olefinically unsaturated nitriles which may be used include acrylonitrile, methacrylonitrile, ethacrylonitrile, crotononitrile and mixtures thereof. Preferably, the olefinically unsaturated nitrile is acrylonitrile.

In one embodiment, the nitrile containing rubbers is characterized by a glass transition (Tg) in a range of -45°C to -10°C; in one embodiment the Tg ranges from -45°C to -25°C.

The nitrile containing rubbers may have a Mooney viscosity (M/L 1+4 at 100°C) that varies. Suitable examples of nitrile containing rubbers have a Mooney viscosity as low as 30 to as high as 90. In one embodiment, the Mooney viscosity ranges from 45 to 70.

The rubber having the nitrile moiety can be prepared by any of the known general techniques of polymerization, including free radical solution polymerization, emulsion or suspension polymerization techniques by batch, continuous

or intermittent addition of the monomers and other components. The preferred method of preparation is an emulsion polymerization. The polymerization is preferably carried out in an aqueous medium in the presence of emulsifiers and a free-radical generating polymerization initiator at a temperature of from 0°C to 100°C, in a substantial absence of molecular oxygen. Preferably, the olefinically unsaturated nitrile is continuously or incrementally added to the reactor depending if the process is continuous or batch.

In the emulsion polymerization, other ingredients such as acids, electrolytes, chain transfer agents, chelating agents, and similar ingredients known in the art to be useful in emulsion polymerization may be employed in any of the feed streams.

A representative chelating agent useful in preparing the composition of the present invention is the tetrasodium salt of ethylenediaminetetracetic acid. Conventional amounts of the chelating agents may be used.

The electrolytes traditionally used in the latex industry may be used to prepare the composition of the present invention. Typical of these electrolytes are tetra sodium and potassium pyrophosphates, tri sodium and potassium phosphates, dipotassium and disodium hydrogen phosphates, potassium and ammonium carbonates, bicarbonates and sulfites. More specifically, tetra sodium and potassium pyrophosphates and tri sodium and potassium phosphates are preferred. The concentrations of the electrolytes are those minimum amounts necessary for achieving the desired effect.

Conventional modifiers or chain transfer agents may be used to prepare the elastomers of the present invention. Examples of these chain transfer agents include mercaptans, bromoform, carbon tetrabromide, and carbon tetrachloride. The most preferred are mercaptans. Examples of suitable mercaptans are n-octyl mercaptan, n-nonyl mercaptan, tertiary-nonyl mercaptan, n-decyl mercaptan, n-dodecyl mercaptan, sec-dodecyl mercaptan, tertiary-dodecyl mercaptan, tertiary-tetradecyl mercaptan, tertiary-hexadecyl mercaptan, secondary-hexadecyl mercaptan, n-hexadecyl mercaptan, or mixtures of mercaptans. It is possible to employ any of such modifiers, individually or in combination contingent to achieving desired polymer properties. With the monomers which are used to prepare the composition of the present invention, it is preferable that a modifier be present. Tertiary-dodecyl mercaptan is a preferred chain transfer agent. Chain transfer agents are conventionally used at a level of 0.05 to 0.8 phm (parts per one hundred parts of monomers). The chain transfer agent may be either premixed with the primary monomers or charged separately.

Suitable free radical polymerization initiators used to prepare the compositions of the present invention are those which are traditionally utilized in emulsion polymerization. Typical initiators or catalysts are persulfates, water soluble peroxides, and hydroperoxides. Typical examples of these initiators are ammonium, potassium and sodium persulfate, hydrogen peroxide, tertiary-butyl hydroperoxide, cumene hydroperoxide, para-menthane hydroperoxide, pinane hydroperoxide, and peroxy carbonates. Preferably, the hydroperoxides are used.

Other catalysts such as redox catalysts may be employed. One such redox system consists of ferrous sulfate heptahydrate, and sodium formaldehyde sulfoxylate. The advantages of the redox catalyst are well known in the art and usually allow lower polymerization temperatures. The initiators or catalysts are used in amounts sufficient to cause polymerization.

A listing of various emulsifiers and detergents which may be used to prepare the composition of the present invention is given in the book McCutcheon's Emulsifiers and Detergents, 1981 Annuals," which is incorporated herein by reference in its entirety. The emulsifiers useful in this invention may be a combination of one or more emulsifiers of the anionic, cationic, non-ionic, or amphoteric class of surfactants. Suitable anionic emulsifying agents are alkyl sulfonate, alkyl aryl sulfonates, condensed naphthalene sulfonates, alkyl sulfates, ethoxylated sulfates, phosphate esters, and esters of sulfosuccinic acid. Representative of these emulsifiers are sodium-alpha-olefin ($C_{14}$-$C_{16}$) sulfonates, alkali metal or ammonium dodecylbenzene sulfonates, disodium dodecyl diphenyloxide disulfonate, disodium palmityl diphenyloxide disulfonate, sodium, potassium or ammonium linear alkyl benzene sulfonate, sodium lauryl sulfate, ammonium alkyl phenolethoxylate sulfate, ammonium or sodium lauryl ether sulfate, ammonium alkyl ether sulfate, sodium alkyl ether sulfate, sodium dihexyl sulfosuccinate, sodium dicyclohexylsulfosuccinate, sodium diamyl sulfosuccinate, sodium diisobutylsulfosuccinate, disodium ethoxylated nonyl phenol half ester of sulfosuccinic acid, tetrasodium N-(1,2-dicarboxyethyl)-N-octadecyl sulfosuccinate, disodium bistridecyl sulfosuccinate, sodium salt of alkyl aryl polyether sulfate, lauryl alcohol ether sulfate, sodium salt of condensed naphthalene sulfonic acid, complex phosphate ester of ethylene oxide adduct and mixtures thereof. Also, the sodium or potassium salts of rosin acid and sodium and potassium salts of mixed fatty acids and mixtures thereof may be used. The amount of emulsifying agents (surfactants) may vary. Conventionally, the concentration of the emulsifying system is normally in the range of from 0.3 to 8.0 phm in the polymerization system.

In addition to the rubber containing a nitrile moiety, the rubber composition or rubber component contains one or more additional conjugated diene-based elastomers. The additional conjugated diene-based elastomers are added during the first nonproductive mix stage of the process to produce the rubber composition. The additional rubber or rubbers generally range from 60 to 80 phr of the total rubber used.

The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The

terms "rubber composition," "compounded rubber" and "rubber compound" are used interchangeably to refer to rubber which has been blended or mixed with various ingredients and materials. Representative of the additional conjugated diene-based elastomers added during the first nonproductive mix step are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene and methyl methacrylate, as well as ethylene/propylene terpolymers, also known as ethylene/propylene/diene monomer (EPDM), and in particular, ethylene/ propylene/ dicyclopentadiene terpolymers. Additional examples of rubbers which may be used include alkoxysilyl end functionalized solution polymerized polymers (SBR, PBR, IBR and SIBR), silicon-coupled and tin-coupled star-branched polymers. The preferred additional rubber or diene based elastomers are polybutadiene and SBR.

In one aspect the additional rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, and cis 1,4-polybutadiene rubbers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent.

The solution polymerization prepared SBR (S-SBR) typically has a bound styrene content in a range of 5 to 50, preferably 9 to 36, percent.

The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. The oil may be added during either of the first or second nonproductive mix steps. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

In one embodiment, the rubber composition may include from 30 to 110 phr of silica.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as silicas commercially available from PPG Industries under the Hi-Sil trademark with designations 210, 243, etc; silicas available from Rhodia, with, for example, designations of Z1165MP and Z165GR and silicas available from Degussa AG with, for example, designations VN2 and VN3, etc.

The silica is intimately dispersed in the first nonproductive compound and optionally in the second nonproductive compound. The mixing may be accomplished by methods known to those skilled in the rubber mixing art. For example, fixed and variable speed mixers or Banbury® may be used. The additional diene based elastomers and silica are mixed in the first nonproductive mix stage. The silica and additional diene based elastomers are mixed for a time and temperature to intimately disperse the silica. For example, mixing at a rubber temperature from 130°C to 180°C for a period of from 10 seconds to 20 minutes. Such mixing time and temperature is applicable to both the first and second nonproductive mix steps.

The vulcanizable rubber composition may further include from 1 to 100 phr of other fillers, including carbon black, crosslinked particulate polymer gel, ultra high molecular weight polyethylene (UHMWPE) or plasticized starch. Other fillers, if any, may be added during either of the first or second nonproductive steps.

Commonly employed carbon blacks can be used as a conventional filler. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 $cm^3$/100 g.

Other fillers may be used in the rubber composition including, but not limited to, particulate fillers including ultra high molecular weight polyethylene (UHMWPE), particulate polymer gels including but not limited to those disclosed in US-A- 6,242,534; US-A- 6,207,757; US-A- 6,133,364; US-A- 6,372,857; US-A-5,395,891; or US-A- 6,127,488, and plasticized starch composite filler including that disclosed in US-A- 5,672,639.

In one embodiment, the rubber composition comprises from 1 to 30 phr of a rubber gel. In another embodiment, the rubber composition comprises from 5 to 20 phr of a rubber gel. The term "rubber gel" or "particulate rubber gel filler" is used herein to describe polybutadiene gel, styrene butadiene gel, acrylonitrile-butadiene gel, chloroprene gel and natural rubber gel. The preferred gels are polybutadiene gel and styrene butadiene gel. Suitable gels are described in and may be produced by methods as are taught in US-A- 5,395,891; US-A-6,127,488; US-A- 6,184,296; US-A- 6,242,534; US-A- 6,207,757; US-A-6,372,857; and US-A- 6,133,364.

In one embodiment, the rubber containing a nitrile moiety is combined with a particulate rubber gel in a gel to rubber containing a nitrile moiety ratio from 1/5 to 1/1, with a preferred ratio from 1/3 to 2/3.

The rubber gels also include such polymeric copolymers grafted with polar unsaturated monomers such as acrylic acid, methacrylic acid, acrylamide, methacrylamide, N-methoxymethyl methacrylic acid amide, N-methoxymethyl methacrylic acid amide, N-acetoxymethyl methacrylic acid amide, acrylonitrile, dimethyl acrylamide, hydroxyethyl acrylate, hydroxyethyl methacrylate (HEMA), hydroxypropyl acrylate, hydroxypropyl methacrylate, hydroxybutyl acrylate, hydroxybutyl methacrylate, trimethylolpropane trimethacrylate (TMPTMA) and mixtures thereof. In one embodiment, the grafted rubber gel may have from 1 to 20 weight percent of its makeup derived from the polar monomers.

In one embodiment, the rubber gel may contain 1 to 10 phm (parts by weight per hundred parts by weight of monomer) of TMPTMA. In one embodiment, the rubber gel may contain 1.5 to 10 phm of HEMA.

The rubber gels preferably have particle diameters of from 20 to 1000, preferably 30 to 400 nm (DVN value to DIN 53 206) and swelling indices ($Q_i$) in toluene of from 1 to 15, preferably 1 to 10. The swelling index is calculated from the weight of the gel when it contains solvent (following centrifuging at 20,000 rpm) and its weight when dry:

$$Q_i = \text{wet weight of gel/dry weight of gel}$$

As an example of determining the swelling index, 250 mg of SBR gel is swelled in 25 ml toluene for 24 hours, with shaking. The gel is centrifuged off and weighed, and is then dried at 70°C until the weight is constant, and is reweighed.

The styrene butadiene rubber starting products are preferably prepared by emulsion polymerization. In this connection see, for example, I. Franta, Elastomers and Rubber Compounding Materials, Elsevier, Amsterdam 1989, Pages 88 to 92.

The styrene butadiene rubber gels are intended to include microgels which are prepared by cross-linking styrene butadiene copolymer which contain from 1 to 80 percent by weight styrene and 99 to 20 percent by weight butadiene. Preferably from 5 to 50 weight percent of the SBR is derived from styrene and the balance being derived from butadiene.

The cross-linking of the rubber starting products to form styrene butadiene rubber gels takes place in the latex state. This may be during polymerization, as a result of continuing the polymerization to high conversions, or in the monomer feeding process as a result of polymerization at high internal conversions, or as a result of post-cross-linking after polymerization, or both processes may be combined. The rubber starting products may also be prepared by polymerization in the absence of regulators.

The styrene butadiene rubber and polybutadiene rubber may also be cross-linked by copolymerization with multifunctional compounds having a cross-linking action. Preferred multifunctional comonomers are compounds having at least two, preferably 2 to 4, copolymerizable C=C double bonds, such as diisopropenylbenzene, divinylbenzene, divinylether, divinylsulphone, diallyl phthalate, triallyl cyanurate, triallyl isocyanurate, 1,2-polybutadiene, N,N'-m-phenylene maleic imide and/or triallyl trimellitate. The following are furthermore considered: acrylates and methacrylates of polyvalent, preferably divalent to tetravalent, $C_2$-$C_{10}$ alcohols, such as ethylene glycol, propanediol-1,2, butanediol, hexanediol, polyethylene glycol, having 2 to 20, preferably 2 to 8 oxyethylene units, neopentyl glycol, bisphenol A, glycerol, trimethylol propane, pentaerythritol, sorbitol and unsaturated polyesters prepared from aliphatic diols and polyols and maleic acid, fumaric acid and/or itaconic acid.

The styrene butadiene rubbers, as well as the natural rubber, polybutadiene rubber, NBR and chloroprene rubber, may also be cross-linked in the latex form to form rubbers gels, as a result of post-cross-linking them with chemicals having a cross-linking action. Suitable chemicals having a cross-linking action are, for example, organic peroxides, for example, dicumyl peroxide, t-butylcumyl peroxide, bis-(t-butyl-peroxyisopropyl) benzene, di-t-butyl peroxide, dibenzoyl peroxide, bis-(2,4-dichlorobenzoyl) peroxide, t-butyl perbenzoate, and organic azo compounds such as azo-bis-isobutyronitrile and azo-bis-cyclohexanenitrile, and dimercapto and polymercapto compounds such as dimercaptoethane, 1,6-dimercaptohexane, 1,3,5-trimercaptotriazine and mercapto-terminating polysulphide rubbers such as mercapto-terminating reaction products of bis-chloroethyl formal with sodium polysulphide. The optimal temperature for the post-cross-linking operation is naturally dependent on the reactivity of the cross-linking agent and may be from room temperature up to approximately 170ºC, optionally at elevated pressure. See in this context Houben-Weyl, Methoden der organischen Chemic[Methods in Organic Chemistry], 4th Edition, Volume 14/2, Page 848. Peroxides are particularly preferred cross-linking agents.

It is also optionally possible to enlarge the particles by agglomeration before, during, or after the post-cross-linking in latex form.

Styrene butadiene rubbers, as well as the other rubbers which have been prepared in organic solvents, may also serve as starting products for the preparation of the respective rubber gels. In this case, it is advisable to emulsify the rubber solution in water, optionally with the aid of an emulsifying agent, and to follow this, either before or after removing the organic solvent, with cross-linking of the emulsion thus obtained using suitable cross-linking agents. The cross-linking agents previously named are suitable cross-linking agents.

The polybutadiene gel may be produced by emulsion polymerization (see, for example, M. Morton, P. P. Salatiello, H. Landfield, J. Polymer Science 8,2 (1952), Pages 215 through 224; P. A. Weerts, J. L. M. van der Loos, A. L. German, Makromol. Chem. 190 (1989), Pages 777 through 788).

The size of the latex particles (DVN value according to DIN 53 2016) is preferably 30 to 500 nm.

Production by polymerization in the absence of regulators is also possible.

In one embodiment, the rubber gel has a glass transition temperature Tg ranging from -80ºC to -10ºC.

A silica coupling agent may be present in the first nonproductive compound and optionally in the second nonproductive step. The silica coupling agent is used to promote the interaction of the silica and the rubber. Various known silica couplers may be used.

In one embodiment the rubber composition may contain a conventional sulfur containing organosilicon compound. Examples of suitable sulfur containing organosilicon compounds are of the formula:

$$Z - Alk - S_n - Alk - Z \qquad I$$

in which Z is selected from the group consisting of

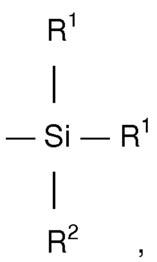
,
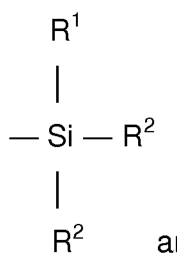
and
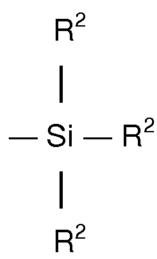

where $R^1$ is an alkyl group of 1 to 4 carbon atoms, cyclohexyl or phenyl; $R^2$ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I,Z may be

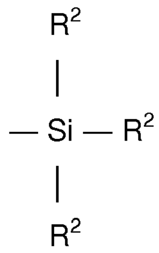

where $R^2$ is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-A- 6,608,125. In one embodiment, the sulfur containing organosilicon compounds includes 3-(octanoylthio)-1-propyltriethoxysilane, $CH_3(CH_2)_6C(=O)-S-CH_2CH_2CH_2Si(OCH_{2C}H_3)_3$, which is available commercially as NXT™ from GE Silicones.

In another embodiment, suitable sulfur containing organosilicon compounds include those disclosed in US-A-2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

Both the first nonproductive compound and second nonproductive compound may contain various commonly used additive materials such as, for example, processing additives such as oils, resins including tackifying resins and plasticizers, pigments, fatty acid, zinc oxide, waxes, antioxidants and antiozonants and peptizing agents. Depending on the intended use of the heterogeneous silica/carbon black-filled rubber compound, the additives mentioned above are selected and commonly used in conventional amounts. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in the Vanderbilt Rubber Handbook (1978), pages 344-346. Typical amounts of antiozonants comprises 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The above additives may be mixed in the first nonproductive compound or second nonproductive compound in any ratio and due to the different compounds will be used at different levels.

The above conventional ingredients may also be added to subsequent mixes including the productive step.

Once the first nonproductive compound and subsequently the second nonproductive have been prepared, the productive compound is prepared. The productive step involves a mixing stage where the curatives are added. For example, sulfur donors or sulfur vulcanizing agents include elemental sulfur (free sulfur), an amine disulfide, polymeric polysulfide and sulfur olefin additives. Preferably, the sulfur vulcanizing agent is elemental sulfur. The sulfur vulcanizing agent may be used in an amount ranging from 0.5 to 8 phr, with a range of from .5 to 4 being preferred. Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, preferably 0.8 to 1.5, phr. In another embodiment, combinations of a primary and a secondary accelerator might be used with the secondary accelerator being used in smaller amounts (of 0.05 to 3 phr) in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The curatives, including sulfur vulcanizing agents, are mixed with the second nonproductive compound. Mixing of a nonproductive compound with curatives is conventionally called "productive" mix stage. Productive mixing typically occurs at a temperature, or ultimate temperature lower than the mix temperature(s) of the preceding nonproductive stage(s) and always below the subsequent cure temperatures. Typical mixing of the productive compound is at a rubber temperature ranging from 90°C to 110ºC for a period of 30 seconds to 3 minutes.

The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road, truck tire, and the like. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following nonlimiting example.

**Example 1**

In this example, the effect of adding a rubber containing a nitrile moiety to a rubber composition during a second nonproductive mix step as compared to addition during a single nonproductive mix step is illustrated. The effect of adding a particulate gel material during the second nonproductive mix step is also illustrated. Rubber compositions containing diene based elastomer, fillers, process aids, antidegradants, and curatives were prepared following the recipes shown in Table 1 with all amounts in phr.

The nonproductive mix steps were mixed for up to 6 minutes and discharged at 160°C. The productive mix step was mixed for up to 2 minutes and discharged at 115°C.

The samples were tested for viscoelastic properties using a Metravib SMD 2000. The temperature sweeps were recorded in shear mode at an amplitude of 0.1%.

The SMD 2000 test results are shown in FIGS. 1-3 are reported as tan delta data obtained for a temperature sweep in a dynamic shear mode at a frequency of 1 Hertz and at an angle of 0.00583 rad.

**Table 1**

| Sample No. | 1 | 2 | 3 | 4 | 5 | 6 |
|---|---|---|---|---|---|---|
| **First Non-Productive Mix Step** | | | | | | |
| Styrene Butadiene Rubber, oil extended[1] | 59 | 59 | 59 | 59 | 59 | 59 |
| Polybutadiene Rubber[2] | 25 | 25 | 25 | 25 | 25 | 25 |
| Nitrile Rubber[3] | 32 | 32 | 32 | 0 | 0 | 0 |
| Styrene-Butadiene Gel[7] | 0 | 10 | 20 | 0 | 0 | 0 |
| Silica | 75 | 75 | 75 | 75 | 65 | 65 |
| Coupling Agent[4] | 6 | 6 | 6 | 5.2 | 5.2 | 5.2 |
| Antidegradant | 0.75 | 0.75 | 0.75 | 0.75 | 0.75 | 0.75 |
| Process Oil | 9.5 | 9.5 | 9.5 | 6 | 6 | 6 |
| Stearic Acid | 3 | 3 | 3 | 3 | 3 | 3 |
| Waxes[5] | 1.75 | 1.75 | 1.75 | 1.75 | 1.75 | 1.75 |

(continued)

| | | | | | | |
|---|---|---|---|---|---|---|
| **Second Non-Productive Mix Step** | | | | | | |
| Nitrile Rubber[3] | 0 | 0 | 0 | 32 | 32 | 32 |
| Styrene-Butadiene Gel[7] | 0 | 0 | 0 | 0 | 10 | 20 |
| Silica | 0 | 0 | 0 | 10 | 10 | 10 |
| Coupling Agent | 0 | 0 | 0 | 0.8 | 0.8 | 0.8 |
| Antidegradant | 0 | 0 | 0 | 1.75 | 1.75 | 1.75 |
| Process Oil | 0 | 0 | 0 | 3 .5 | 3.5 | 3.5 |
| **Productive Mix Step** | | | | | | |
| Sulfur | 1.6 | 1.6 | 1.6 | 1.6 | 1.6 | 1.6 |
| Zinc Oxide | 2.5 | 2.5 | 2.5 | 2.5 | 2.5 | 2.5 |
| Accelerators[6] | 3 | 3 | 3 | 3 | 3 | 3 |
| Antidegradant | 0.5 | 0.5 | 0.5 | 0.5 | 0.5 | 0.5 |

[1]Styrene-butadiene rubber, SLF 33H23, extended with 37.5 phr process oil, from The Goodyear Tire & Rubber Company
[2]Budene 1207 from The Goodyear Tire & Rubber Company
[3]Acrylonitrile-butadiene rubber with 33 percent bound acrylonitrile and Mooney viscosity ML (1 +4) at 100°C = 70.
[4]bis(triethoxysilylpropyl) tetrasulfide
[5]paraffinic and microcrystalline
[6]sulfenamide and guanidine types
[7]SBR gel with Tg = -15°C; copolymerized with 7.5 phm hydroxyethylmethacrylate and crosslinked with 1.5 phm trimethylolpropane trimethacrylate.

The tan delta is, basically, a ratio of lost modulus (G") to storage modulus (G'). The G' is considered a measure of the rubber's ability to dissipate energy and the G" is considered a measure of the rubber's ability to absorb energy. Thus, in effect, the tan delta is a measure of a compound's viscoelastic character and has been observed to relate to tire performance.

It has been observed that, in practice, a low tan delta in the higher temperature region of 40°C to 60°C is desirable for a tire tread to provide a tire with good rolling resistance while a high tan delta in the lower temperature region of -20°C to 20°C is desirable for a tire tread to provide a tire with good wet traction.

As seen in FIG. 1, the curve for inventive rubber Sample 4 exhibits a high tan delta in the region of -20°C to 0°C, thus, predictably suitable for providing a tire with good wet traction and a low tan delta in the region of 40°C, thus, predictably suitable for a tire with good rolling resistance for this rubber blend. The importance of such phenomenon that the rubber blend of this invention enables a relative optimization of the property of tan delta for prescribed temperatures while also maintaining or even optimizing the property of a tire's rolling resistance and wet skid resistance.

The curve for rubber Sample 4 shows a higher tan delta in the -20°C to 0°C range, thus, predicting a better traction than control Sample 1 and a tan delta as low as sample 1 suggesting equal rolling resistance, as compared to Sample 1, for this rubber blend.

In particular, rubber Sample 4 shows a tan delta in the -20°C to 0°C range that is 40 percent higher than that for Sample 1. It is therefore to be expected that the tan delta in the -20°C to 0°C range for a rubber composition made according to the present invention will be from 20 to 40 percent higher, alternatively from 25 to 35 percent higher, than for a rubber composition made with a single nonproductive mix step, wherein the nitrile containing rubber is mixed in the sole nonproductive step.

The advantages of such dual optimization are many fold, particularly including rolling resistance and skid resistance.

Thus the data demonstrate that addition of the nitrile containing rubber during the second nonproductive step in the mixing process leads to unexpectedly higher tan delta in the low temperature region, indicating a better traction performance for the inventive Sample 4 as compared to control Sample 1.

FIG. 2 shows the effect of adding a rubber gel to the rubber composition in the first non-productive mix step. As is evident, the gel results in a higher tan delta in the -20°C to 0°C range for samples containing the gel (Samples 2

and 3) as compared with the control Sample 1.

FIG. 3 illustrates the effect of adding gel in the second non-productive step. As is evident from FIG. 3, the gel results in a moderately higher tan delta in the -20ºC to 0ºC range for samples containing the gel (Samples 5 and 6) as compared with no gel (Sample 4).

## Example 2

Samples made following the recipes of Table 1 were cured for 14 minutes at 160°C were tested for various physical properties, with results as shown in Table 2. Viscoelastic strain sweeps were performed using Metravib instrumentation.

**Table 2**

| **Sample No.** | **1** | **2** | **3** | **4** | **5** | **6** |
|---|---|---|---|---|---|---|
| NBR in First Non Productive | 32 | 32 | 32 | 0 | 0 | 0 |
| NBR in Second Non Productive | 0 | 0 | 0 | 32 | 32 | 32 |
| Gel in First Non Productive | 0 | 10 | 20 | 0 | 0 | 0 |
| Gel in Second Non Productive | 0 | 0 | 0 | 0 | 10 | 20 |
| **RPA2000 tested at 100°C, 1 Hz** | | | | | | |
| G' at 1% strain, MPa | 2.14 | 1.89 | 1.54 | 2.22 | 1.94 | 1.79 |
| G' at 10% strain, MPa | 1.6 | 1.49 | 1.30 | 1.64 | 1.51 | 1.45 |
| G' at 50% strain, MPa | 0.88 | 0.94 | 0.95 | 0.98 | 0.97 | 0.99 |
| tan delta at 1% strain | 0.109 | 0.099 | 0.09 | 0.118 | 0.101 | 0.092 |
| tan delta at 10% strain | 0.109 | 0.091 | 0.08 | 0.101 | 0.091 | 0.082 |
| **Tensile Properties measured at 23°C** | | | | | | |
| Elongation at Break, % | 373.3 | 364.7 | 368.1 | 484.2 | 456.4 | 417.9 |
| True Tensile | 72.2 | 70.1 | 61.4 | 103 | 95.2 | 83.8 |
| 100% Modulus, MPa | 2.7 | 2.6 | 2.5 | 2.3 | 2.4 | 2.6 |
| 300% Modulus, MPa | 13.1 | 13.3 | 11.4 | 10.5 | 11.4 | 12.1 |
| Tensile Strength, MPa | 15.2 | 15.1 | 13.1 | 17.6 | 17.1 | 16.2 |
| **Tensile Properties measured at 100°C** | | | | | | |
| Elongation at Break, % | 241.8 | 215.6 | 187.6 | 282.5 | 255 | 224 |
| 100% Modulus, MPa | 2.4 | 2.3 | 2.3 | 2.1 | 2.2 | 2.3 |
| Tensile Strength, MPa | 6.8 | 5.7 | 4.4 | 6.9 | 6.7 | 6 |
| **Tear Strength** | | | | | | |
| Adhesion to Self, N | 16.7 | 14.6 | 1.9 | 16.1 | 14.7 | 12.4 |
| **Drum Abrasion** | | | | | | |
| Volume loss ($mm^3$) | 60.7 | 68.0 | 69.3 | 80.1 | 75.3 | 73.6 |
| **Zwick Rebound** | | | | | | |
| Rebound at 23°C | 15.2 | 14 | 11.4 | 11.4 | 10.4 | 10.1 |
| Rebound at 60°C | 54.1 | 55.3 | 59.9 | 54.9 | 57.1 | 58.4 |

(continued)

| | | | | | | |
|---|---|---|---|---|---|---|
| **Viscoelastic Strain Sweep at -10ºC, 1 % Dynamic Strain** | | | | | | |
| G', MPa | 16.3 | 16.2 | 14.7 | 16.0 | 18.0 | 17.4 |
| Tan delta | 0.523 | 0.558 | 0.69 | 0.709 | 0.706 | 0.701 |
| Complex Shear Compliance, $10^8$/Pa | 5.435 | 5.41 | 5.593 | 5.11 | 4.535 | 4.72 |
| **Viscoelastic Strain Sweep at -10ºC, 12% Dynamic Strain** | | | | | | |
| G', MPa | 4.95 | 4.9 | 5.19 | 4.25 | 4.57 | 5.04 |
| tan delta | 0.614 | 0.633 | 0.748 | 0.762 | 0.787 | 0.786 |
| **Viscoelastic Strain Sweep at 50ºC, 1% Dynamic Strain** | | | | | | |
| G', MPa | 3.025 | 2.6 | 2.045 | 2.84 | 2.53 | 2.345 |
| tan delta | 0.15 | 0.136 | 0.116 | 0.149 | 0.132 | 0.12 |
| **Viscoelastic Strain Sweep at 50ºC, 12% Dynamic Strain** | | | | | | |
| G', MPa | 1.725 | 1.605 | 1.455 | 1.56 | 1.545 | 1.545 |
| tan delta | 0.166 | 0.155 | 0.136 | 0.165 | 0.151 | 0.141 |

The tan delta values at -10°C and rebound at 0°C show the same trend as the tan delta peak measured using the SMD 2000. It is further of interest that other properties are otherwise affected depending upon whether the gel is added during the first or second non-productive mix step. For example, adding gel in the first non-productive step results in a reduction in 100% modulus and 300 % modulus, while adding gel in the second non-productive step results in an increase in 100% and 300% modulus. Adding gel in the first non-productive step results in an increase in DIN abrasion, while adding gel in the second non-productive step results in a decrease in DIN abrasion. Storage moduli at 50°C and 100°C are depressed and tan delta at 50 and 100°C are reduced independently of the gel addition stage.

## Claims

1. A process of preparing a rubber composition, comprising 100 parts by weight of elastomer, the process comprising the steps of

   (A) mixing a first composition comprising 30 to 110 parts by weight, per 100 parts by weight of elastomer (phr), of a silica filler and 20 to 90 phr of a diene based elastomer selected from cis 1,4-polyisoprene rubber (natural or synthetic), 3,4-polyisoprene rubber, styrene/isoprene/butadiene rubber, emulsion and solution polymerization derived styrene/butadiene rubbers, and cis 1,4-polybutadiene rubbers, to form a first nonproductive compound;
   (B) mixing a second composition comprising from 10 to 80 phr of a rubber containing a nitrile moiety and the first productive compound to form a second nonproductive compound; and
   (C) mixing a third composition comprising curatives and the second nonproductive compound to form a productive compound.

2. The process of claim 1, wherein the second composition further comprises from 5 to 20 phr of silica in addition to the silica added in the first composition.

3. The process of claim 1 or 2, wherein the second composition further comprises from 1 to 30 phr of a particulate rubber gel filler.

4. The process of any of claim 3, wherein the particulate rubber gel filler is a styrene-butadiene rubber gel grafted with at least one polar unsaturated monomer.

5. The process of claim 4 wherein the at least one polar unsaturated monomer is selected from the group consisting of acrylic acid, methacrylic acid, acrylamide, methacrylamide, N-methoxymethyl methacrylic acid amide, N-methoxymethyl methacrylic acid amide, N-acetoxymethyl methacrylic acid amide, acrylonitrile, dimethyl acrylamide, hydroxyethyl acrylate, hydroxyethyl methacrylate, hydroxypropyl acrylate, hydroxypropyl methacrylate, hydroxybutyl

acrylate, hydroxybutyl methacrylate, and trimethylolpropane trimethacrylate.

**6.** The process of at least one of the previous claims, wherein the diene based elastomer in the first composition is selected from polybutadiene rubber and styrene-butadiene rubber.

**7.** The process of at least one of the previous claims, wherein the curatives comprise sulfur and accelerators.

**8.** The process of at least one of the previous claims, wherein the productive compound has a tan delta measured at -20°C to 0°C that is from 20 to 40 percent higher than for an otherwise identical productive compound having the rubber containing a nitrile moiety mixed in a sole nonproductive step of a mix process.

**9.** A pneumatic tire having a component produced by the process of any of the previous claims.

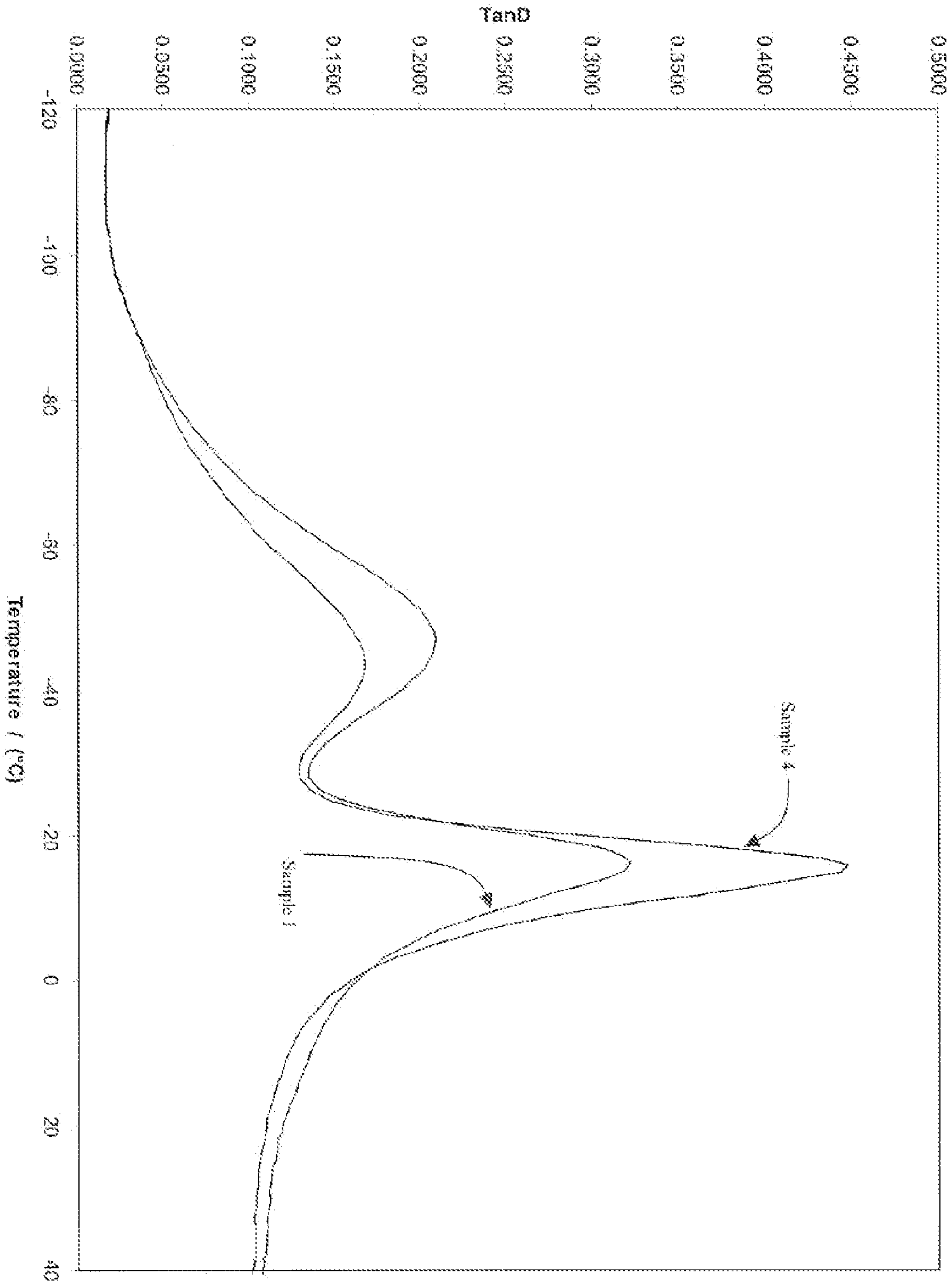
TanD
0.0000
0.0500
0.1000
0.1500
0.2000
0.2500
0.3000
0.3500
0.4000
0.4500
0.5000
-120
-100
-80
-60
-40
-20
0
20
40
Temperature / (°C)
Sample 4
Sample 1

FIG - 1

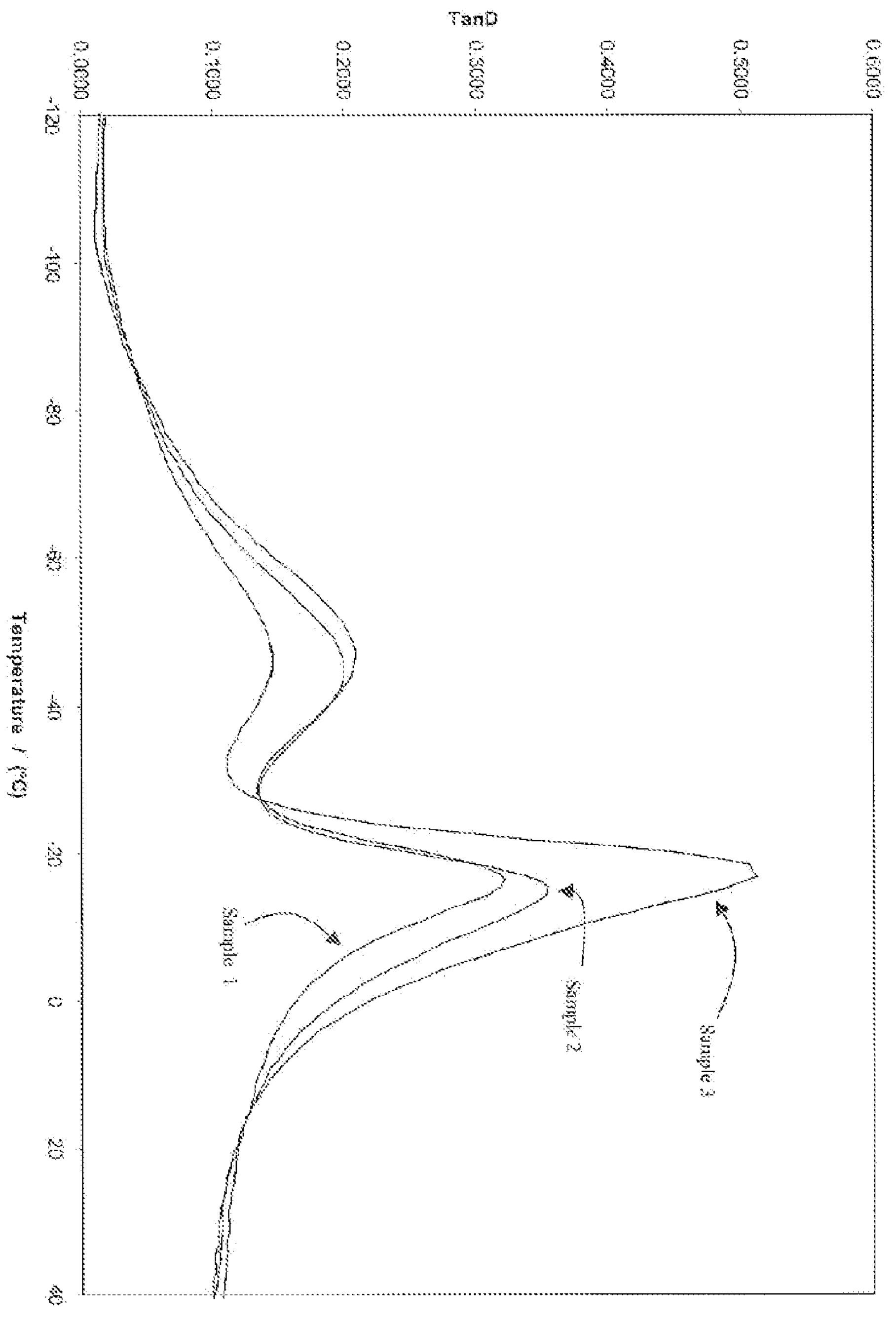
TanD
0.0000
0.1000
0.2000
0.3000
0.4000
0.5000
0.6000
-120
-100
-80
-60
-40
-20
0
20
40
Temperature / (°C)
Sample 1
Sample 2
Sample 3

FIG - 2

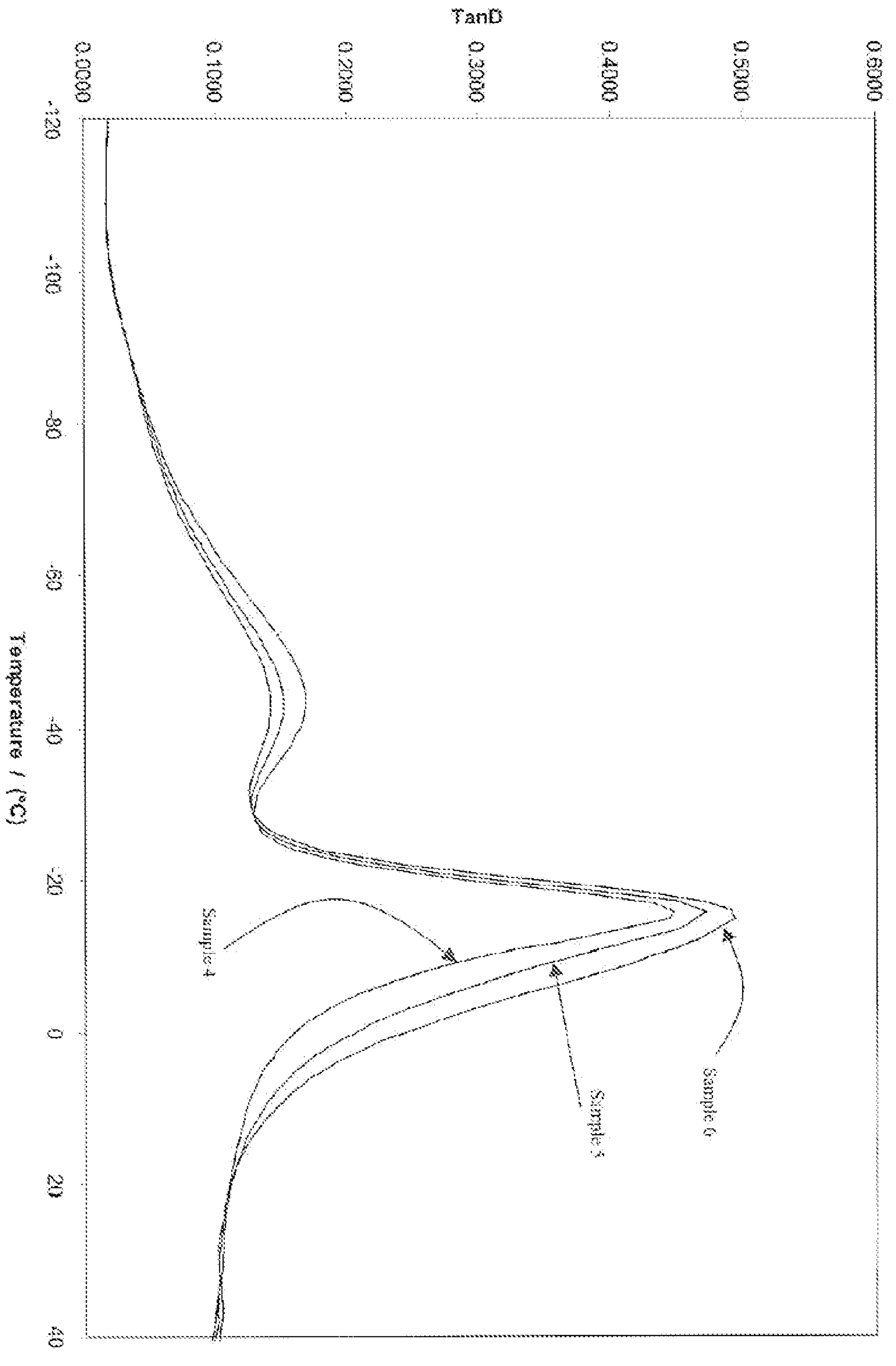
TanD
0.0000
0.1000
0.2000
0.3000
0.4000
0.5000
0.6000
-120
-100
-80
-60
-40
-20
0
20
40
Temperature / (°C)
Sample 4
Sample 5
Sample 6

FIG - 3

European Patent Office

# EUROPEAN SEARCH REPORT

Application Number
EP 07 12 3321

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | EP 0 763 558 A (GOODYEAR TIRE & RUBBER [US]) 19 March 1997 (1997-03-19)<br>* abstract; claims; examples *<br>* page 2, line 18 - line 54 *<br>----- | 1,6-9<br><br><br>2-5 | INV.<br>C08J3/20<br>C08L21/00<br>C08K3/36<br>B60C1/00 |
| Y | EP 0 731 134 A (GOODYEAR TIRE & RUBBER [US]) 11 September 1996 (1996-09-11)<br>* abstract; example II; table 3 *<br>----- | 2 | |
| D,Y | US 6 242 534 B1 (OBRECHT WERNER [DE] ET AL) 5 June 2001 (2001-06-05)<br>* abstract; table 2 *<br>* column 10, line 55 - line 65 *<br>----- | 3-5 | |
| A | WO 2004/000932 A (BAYER AG [DE]; RAWLINSON ADRIAN [DE]; WENDLING PETER [DE]; ENGEHAUSEN) 31 December 2003 (2003-12-31)<br>* abstract; claims; examples *<br>----- | 1-9 | |
| | | | TECHNICAL FIELDS SEARCHED (IPC) |
| | | | C08J<br>C08L |

The present search report has been drawn up for all claims

1

| Place of search | Date of completion of the search | Examiner |
|---|---|---|
| The Hague | 6 March 2008 | Mettler, Rolf-Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 07 12 3321

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2008

| Patent document cited in search report | Publication date | Patent family member(s) | Publication date |
|---|---|---|---|
| EP 0763558 A | 19-03-1997 | CA 2168700 A1 | 14-03-1997 |
| | | US 5773504 A | 30-06-1998 |
| EP 0731134 A | 11-09-1996 | AR 001193 A1 | 24-09-1997 |
| | | AU 695302 B2 | 13-08-1998 |
| | | AU 4797796 A | 19-09-1996 |
| | | BR 9600880 A | 30-12-1997 |
| | | CA 2154859 A1 | 11-09-1996 |
| | | CN 1141313 A | 29-01-1997 |
| | | JP 3623843 B2 | 23-02-2005 |
| | | JP 8259735 A | 08-10-1996 |
| | | TR 960862 A1 | 21-10-1996 |
| | | US 5534574 A | 09-07-1996 |
| US 6242534 B1 | 05-06-2001 | AT 251200 T | 15-10-2003 |
| | | CA 2279220 A1 | 01-02-2000 |
| | | DE 19834802 A1 | 03-02-2000 |
| | | EP 0978530 A1 | 09-02-2000 |
| | | JP 2000072921 A | 07-03-2000 |
| WO 2004000932 A | 31-12-2003 | AU 2003279349 A1 | 06-01-2004 |
| | | CA 2490251 A1 | 31-12-2003 |
| | | DE 10227733 A1 | 08-01-2004 |
| | | EP 1517953 A1 | 30-03-2005 |
| | | JP 2005530013 T | 06-10-2005 |
| | | US 2003236333 A1 | 25-12-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6242534 A
- US 6207757 A
- US 6133364 A
- US 6372857 A
- US 5395891 A
- US 6127488 A
- US 5672639 A
- US 6184296 A
- US 6608125 A
- US 20030130535 A


### Non-patent literature cited in the description


- Standard Methods for Analysis & Testing of Petroleum and Related Products. British Standard 2000 Parts. Institute of Petroleum, 2003
- *Journal of the American Chemical Society,* 1930, vol. 60, 304
- **I. FRANTA.** Elastomers and Rubber Compounding Materials. Elsevier, 1989, 88-92
- **HOUBEN-WEYL.** Methoden der organischen Chemic. vol. 14/2, 848
- **M. MORTON ; P. P. SALATIELLO ; H. LANDFIELD.** *J. Polymer Science,* 1952, vol. 8,2, 215-224
- **P. A. WEERTS ; J. L. M. VAN DER LOOS ; A. L. GERMAN.** *Makromol. Chem.,* 1989, vol. 190, 777-788
- Vanderbilt Rubber Handbook. 1978, 344-346